# EUROPÄISCHE PATENTSCHRIFT

(11) **EP 3 077 685 B1**
(45) Veröffentlichungstag und Bekanntmachung des Hinweises auf die Patenterteilung: **11.03.2020**
(21) Anmeldenummer: 14805552.8
(22) Anmeldetag: 26.11.2014
(51) Int. Cl.: F16B 23/00

(54) **SCHRAUBE UND ANTRIEBSELEMENT MIT FASE**
SCREW AND DRIVE ELEMENT HAVING A CHAMFER
VIS ET ÉLÉMENT D'ENTRAÎNEMENT PRÉSENTANT UN BISEAU

(30) Priorität: 03.12.2013 DE 102013113401
(43) Veröffentlichungstag der Anmeldung: 12.10.2016
(73) Patentinhaber: Adolf Würth GmbH & Co. KG, 74653 Künzelsau (DE); Würth International AG, 7000 Chur (CH)
(72) Erfinder: WUNDERLICH, Andreas, 74635 Kupferzell (DE); STARKE, Johannes, 74248 Ellhofen (DE)
(74) Vertreter: Dilg, Haeusler, Schindelmann Patentanwaltsgesellschaft mbH
(86) Internationale Anmeldenummer: PCT/EP2014/075682
(87) Internationale Veröffentlichungsnummer: WO 2015/082283

(56) Entgegenhaltungen:
- EP-A1- 1 245 839
- WO-A1-2004/065803
- DE-A1- 3 911 409
- US-A1- 2005 172 762

## Beschreibung

Die Erfindung betrifft eine Schraube, ein Antriebselement, eine Anordnung und ein Verfahren zum Einbringen einer Schraube in einen Untergrund.

Herkömmliche Schrauben bzw. Befestigungselemente sind aus DE 69308484 T2, US 2005/172762 A, US 6,951,158, EP 0,933,538 A1, DE 4244989 C2 und EP 0,488,541 A1 bekannt.

Als auf ein Aussparungsprofil eines Befestigungselements funktionell einwirkende Komponenten eines Antriebselements dienen gemäß US 4,464,957 Flügelflächen nur in einem geneigten Abschnitt des Antriebselements.

EP 0,524,617 A1 offenbart eine Schraube, die zu ihrem Antrieb eine Vertiefung enthält, die eine von der Kreisform abweichende Außenkontur abweist. Im radialen Innenbereich und/oder im radialen Außenbereich der Vertiefung werden die Seitenwände von einzelnen Flächen gebildet, die auf einer Kegelfläche liegen.

Insbesondere sind Schrauben mit einem so genannten AW-Antrieb kommerziell verfügbar, der als Innensechsrund mit sechs umfänglich verteilten Flügeln ausgebildet ist und zusätzlich von einem Kegelstumpf durchdrungen ist, der am inneren Durchmesser des Innensechsrundes am Boden des Antriebes ausläuft.

Wenngleich sich aus dem Stand der Technik bekannte Schrauben als leistungsfähig erwiesen haben, können diese unter starker Belastung und ungünstigen Begleitumständen in manchen Fällen zu einem unerwünschten Brechen oder Abscheren des Schraubenkopfs neigen. Auch besteht noch Raum zur weiteren Verbesserung hinsichtlich Führbarkeit und Zentrierbarkeit einer solchen Schraube durch ein Antriebselement wie ein Bit.

Es ist eine Aufgabe der vorliegenden Erfindung, eine Schraube und ein zugehöriges Antriebselement bereitzustellen, die gute Eigenschaften hinsichtlich Führbarkeit und Zentrierbarkeit der Schraube haben und einen zuverlässigen Schutz des Schraubenkopfs der Schraube und des Antriebselements vor Abscheren bieten.

Diese Aufgabe wird durch die Gegenstände mit den Merkmalen gemäß den unabhängigen Patentansprüchen gelöst. Weitere Ausführungsbeispiele sind in den abhängigen Ansprüchen gezeigt.

Gemäß einem Ausführungsbeispiel der vorliegenden Erfindung ist eine Schraube (zum Beispiel aus Metall) zum Einbringen in einen Untergrund geschaffen, wobei die Schraube einen Schraubenschaft und einen sich an den Schraubenschaft (direkt, d.h. ohne Zwischenkomponente, oder indirekt, d.h. mit einer oder mehreren Zwischenkomponenten zwischen Schraubenschaft und Schraubenkopf) anschließenden Schraubenkopf aufweist, in dem ein Antrieb (als speziell geformter Hohlraum, der durch eine Wandung des Schraubenkopfs begrenzt ist, und in den ein entsprechend geformtes Antriebselement zum Drehantreiben der Schraube formschlüssig eingreifen kann, um Drehmoment von dem rotierenden Antriebselement auf die Schraube zu übertragen) zum Drehantreiben der Schraube mittels eines Antriebselements ausgebildet ist, wobei der Antrieb einen schraubenaußenseitigen (insbesondere einen unmittelbar ans Schraubenäußere angrenzenden bzw. ins Schraubenäußere übergehenden) Hohlflügelabschnitt mit kreisförmigem Hohlkern und entlang des Kreisumfangs vorgesehenen Hohlflügeln (insbesondere so, dass die Hohlflügel anschaulich ein Umfangsprofil auf den gedachten kreisförmigen Hohlkern aufmodulieren) aufweist, wobei der Antrieb einen schraubeninnenseitigen (insbesondere den Boden des Antriebs in dem Schraubenkopf bildenden) Hohlvertiefungsabschnitt (der insbesondere als Hohlkegelabschnitt ausgebildet sein kann) aufweist, und wobei der Antrieb an einem Übergang (in axialer Richtung) zwischen dem Hohlflügelabschnitt und dem Hohlvertiefungsabschnitt einen Fasenabschnitt (insbesondere einen Abschnitt mit einer vollumfänglich oder zumindest abschnittsweise umfänglich umlaufenden Fase, weiter insbesondere einer im Querschnitt ebenen Abflachung des Übergangs zwischen Hohlflügelabschnitt und Hohlvertiefungsabschnitt) aufweist, dessen Außenfläche gegenüber einer Außenfläche des Hohlflügelabschnitts (insbesondere gegenüber einer Schraubenachse nach innen hin) und gegenüber einer Außenfläche des Hohlvertiefungsabschnitts (insbesondere gegenüber einer

Schraubenachse nach außen hin) abgewinkelt ist, wobei Ausläufer der Hohlflügel sich bis in den Fasenabschnitt hinein erstrecken; wobei die Hohlflügel von einem schraubenaußenseitigen Ende des Hohlflügelabschnitts bis zum Anfang des Fasenabschnitts einen konstanten Außendurchmesser haben; wobei der Hohlkern des Hohlflügelabschnitts sich zur Schraubeninnenseite hin, insbesondere konisch, verjüngt.

Gemäß einem weiteren Ausführungsbeispiel der vorliegenden Erfindung ist ein Antriebselement (zum Beispiel zumindest teilweise aus Metall) zum Drehantreiben einer Schraube, insbesondere einer Schraube mit den oben beschriebenen Merkmalen, zum Einbringen in einen Untergrund bereitgestellt, wobei das Antriebselement einen Flügelabschnitt mit kreisförmigem Kern und entlang des Kreisumfangs vorgesehenen Flügeln (insbesondere so, dass die Flügel anschaulich ein Umfangsprofil auf den gedachten kreisförmigen Kern aufmodulieren), einen endseitigen Vertiefungsabschnitt (insbesondere einen Kegelabschnitt), und einen Fasenabschnitt (insbesondere einen Abschnitt mit einer vollumfänglich oder zumindest abschnittsweise umfänglich umlaufenden Fase, weiter insbesondere einer im Querschnitt ebenen Abflachung des Übergangs zwischen Flügelabschnitt und Vertiefungsabschnitt) an einem Übergang (in axialer Richtung) zwischen dem Flügelabschnitt und dem Vertiefungsabschnitt aufweist, wobei eine Außenfläche des Fasenabschnitts gegenüber einer Außenfläche des Flügelabschnitts (insbesondere gegenüber einer Antriebselementdrehachse nach innen hin) und gegenüber einer Außenfläche des Vertiefungsabschnitts (insbesondere gegenüber einer Antriebselementdrehachse nach außen hin) abgewinkelt ist; wobei die Flügel von einem dem Antrieb der Schraube im Drehbetrieb abgewandten Ende des Flügelabschnitts bis zum Anfang des Fasenabschnitts einen konstanten Außendurchmesser haben; wobei der Kern des Flügelabschnitts sich zum Vertiefungsabschnitt hin, insbesondere konisch, verjüngt.

Gemäß noch einem anderen Ausführungsbeispiel der vorliegenden Erfindung ist eine Anordnung zum Einbringen einer Schraube in einen Untergrund geschaffen, wobei die Anordnung die Schraube mit den oben beschriebenen Merkmalen und ein Antriebselement mit den oben beschriebenen Merkmalen zum Drehantreiben der Schraube zum Einbringen der Schraube in den Untergrund aufweist (wobei das Antriebselement und der Antrieb der Schraube zueinander mit im Wesentlichen inverser Form ausgebildet sein können und bis auf ein technisch bedingtes Spiel bzw. eine herstellungsbedingte Toleranz im Wesentlichen gleiche Dimensionen aufweisen können).

Gemäß noch einem weiteren Ausführungsbeispiel der Erfindung ist ein Verfahren zum Einbringen einer Schraube mit den oben beschriebenen Merkmalen in einen Untergrund mittels eines Antriebselements mit den oben beschriebenen Merkmalen geschaffen, wobei bei dem Verfahren die Hohlflügel des Hohlflügelabschnitts der Schraube mit den Flügeln des Flügelabschnitts des Antriebselements in Eingriff gebracht werden, die Ausläufer der Hohlflügel in dem Fasenabschnitt der Schraube mit den Ausläufern der Flügel des Fasenabschnitts des Antriebselements in Eingriff gebracht werden, und die Schraube mittels des Antriebselements drehangetrieben wird.

Gemäß einem Ausführungsbeispiel der vorliegenden Erfindung ist es durch das Vorsehen einer Fase an einer Schnittstelle zwischen profilierten Hohlflügeln und einer vorzugsweise profillosen Hohlvertiefung möglich, ein in axialer Richtung der Schraube besonders langes bzwverlängertes Flügelprofil vorzusehen, ohne dass dadurch ein Kerndurchmesser der Hohlflügel eine übermäßig große Dimension annimmt. Durch ein in axialer Richtung langgestrecktes Flügelprofil kann ein unerwünschtes Verkippen eines korrespondierend geformten Antriebselements beim Eingreifen in den Antrieb der Schraube vermieden werden und dadurch eine saubere Führung und Zentrierung der Schraube beim Einbringen in den Untergrund durch das Antriebselement sichergestellt werden. Indem der Kerndurchmesser der Hohlflügel in Grenzen gehalten wird bzw. vor einer übermäßig großen Dimension bewahrt wird sowie durch die beschriebene Konfiguration des Antriebs kann auch eine ausreichend große Restbodendicke der Schraube zwischen Antrieb und einer Außenseite des Schraubenkopfs aufrechterhalten wird, ist auch die Tendenz der Schraube zum unerwünschten Abscheren bei Betätigen durch das Antriebselement sehr niedrig. Gleichzeitig kann ein großes Drehmoment vom Antriebselement auf die Schraube übertragen werden.

Im Weiteren werden zusätzliche exemplarische Ausführungsbeispiele der Schraube, des Antriebselements, des Verfahrens und der Anordnung beschrieben.

Gemäß einem exemplarischen Ausführungsbeispiel kann bei dem Antrieb der schraubenaußenseitige Hohlflügelabschnitt außenseitig Zylinderform und innenseitig Kegelstumpfform aufweisen, kann der Fasenabschnitt außenseitig und innenseitig jeweils Kegelstumpfform aufweisen, und kann der Hohlvertiefungsabschnitt nur Kegelform aufweisen. In entsprechender Weise kann bei dem Antriebselement der Flügelabschnitt außenseitig Zylinderform und innenseitig Kegelstumpfform aufweisen, kann der Fasenabschnitt außenseitig und innenseitig jeweils Kegelstumpfform aufweisen, und kann der Vertiefungsabschnitt nur Kegelform aufweisen. Insbesondere kann bei dem Fasenabschnitt des Antriebs (und bei dem Fasenabschnitt des Antriebselements) der kleinere Durchmesser beider Kegelstümpfe gleich sein, so dass dann anschaulich beide an einer Stelle radial auf gleicher Höhe liegen. Es hat sich gezeigt, dass eine solche Ausgestaltung bei großer Robustheit zu einer exzellenten Drehmomentübertragung und zu einem sicheren Griff führt.

Erfindungsgemäß erstrecken sich Ausläufer der Hohlflügel bis in den Fasenabschnitt hinein. In entsprechender Weise können bei dem Antriebselement Ausläufer der Flügel sich bis in den Fasenabschnitt hinein erstrecken. Anschaulich kann somit erfindungsgemäß die axiale Länge der radialen Hügel über den Hohlflügelabschnitt bzw. den Flügelabschnitt hinaus vergrößert werden. Damit kann eine gut führbare und gleichzeitig abschergeschützte Schraube bereitgestellt werden.

Gemäß einem exemplarischen Ausführungsbeispiel der Schraube kann der Hohlvertiefungsabschnitt (insbesondere ausgebildet als Hohlkegelabschnitt) von Hohlflügeln frei sein. In entsprechender Weise kann bei dem Antriebselement der Vertiefungsabschnitt (insbesondere ausgebildet als Kegelabschnitt) von Flügeln frei sein. Somit kann im Hohlvertiefungsabschnitt die Innenfläche von Erhebungen bzw. im Vertiefungsabschnitt die Außenfläche von Erhebungen frei bzw. glatt sein. Dadurch kann auch eine unerwünschte Berührung zwischen dem Boden des Antriebselement und dem Boden des Antriebs vermieden werden und dadurch eine verkippgeschützte Führung der Schraube durch das Antriebselement gewährleistet werden.

Erfindungsgemäß haben - entlang der Schraubenachse - die Hohlflügel von einem schraubenaußenseitigen Ende des Hohlflügelabschnitts bis zum Anfang des Fasenabschnitts einen konstanten bzw. gleichbleibenden Außendurchmesser. In entsprechender Weise haben erfindungsgemäß bei dem Antriebselement - entlang der Drehachse des Antriebselements - die Flügel von einem dem Antrieb der Schraube im Drehbetrieb abgewandten Ende des Flügelabschnitts bis zum Anfang des Fasenabschnitts einen konstanten bzw. gleichbleibenden Außendurchmesser. Dadurch ist eine effiziente Kraftübertragung von den Flügeln auf die profilierte Wandung der Schraube angrenzend an die Hohlflügelabschnitte gewährleistet, indem in axialer Richtung eine gleichbleibend große Kontaktfläche zwischen Hohlflügeln und Flügeln bereitgestellt wird.

Erfindungsgemäß verjüngt sich der Hohlkern des Hohlflügelabschnitts zum Boden des Antriebs hin, insbesondere konisch. In entsprechender Weise verjüngt sich bei dem erfindungsgemäßen Antriebselement der Kern des Flügelabschnitts zum Vertiefungsabschnitt hin, insbesondere konisch. Eine solche konische Verjüngung gewährleistet eine automatische Selbstzentrierung bzw. Selbstführung des Antriebselement beim Einführen in den Antrieb des Schraubenkopfs.

Gemäß einem exemplarischen Ausführungsbeispiel der Schraube kann ein Öffnungswinkel eines von dem Fasenabschnitt (bzw. von einer Einhüllenden eines sich axial verjüngenden Teils des Fasenabschnitts) extrapolierten Konus größer als ein Öffnungswinkel eines von dem

Hohlflügelabschnitt (bzw. von einer Einhüllenden eines sich axial verjüngenden Teils des Hohlflügelabschnitts) extrapolierten Konus sein. In entsprechender Weise kann bei dem Antriebselement ein Öffnungswinkel eines von dem Fasenabschnitt (bzw. von einer Einhüllenden eines sich axial verjüngenden Teils des Fasenabschnitts) extrapolierten Konus größer als ein Öffnungswinkel eines von dem Flügelabschnitt (bzw. von einer Einhüllenden eines sich axial verjüngenden Teils des Flügelabschnitts) extrapolierten Konus sein. Wenn sich der Hohlkern des Hohlflügelabschnitts ins Schraubeninnere hin verjüngt, kann dieser (ungeachtet der verjüngungsfreien Ausgestaltung der Hohlflügel bzw. der Flügel) als hohlkegelstumpfförmig bezeichnet werden und dieser Form ein entsprechender Konus zugeordnet werden. Gemäß einem exemplarischen Ausführungsbeispiel kann ein Öffnungswinkel des als Hohlkegelabschnitt ausgebildeten Hohlvertiefungsabschnitts größer als ein Öffnungswinkel eines von dem Fasenabschnitt der Schraube extrapolierten Konus sein. In entsprechender Weise kann bei dem Antriebselement ein Öffnungswinkel des als Kegelabschnitt ausgebildeten Vertiefungsabschnitts größer als ein Öffnungswinkel eines von dem Fasenabschnitt des Antriebselements extrapolierten Konus sein. Anschaulich kann somit die Konussteigung im Bereich des Hohlflügelabschnitts steiler (bzw. schraubenachsennäher) sein als im Bereich des Fasenabschnitts und gleichzeitig im Bereich des Fasenabschnitts steiler (bzw. schraubenachsennäher) sein als im Hohlkegelabschnitt. Dadurch ist eine zwar stufenhafte, aber doch sanfte Angleichung der Steilheit der Wandung in dem Antrieb ermöglicht. Entsprechendes gilt für die Angleichung der Steilheit der einzelnen Abschnitte in dem Antriebselement.

Gemäß einem exemplarischen Ausführungsbeispiel der Schraube kann die Außenfläche des Fasenabschnitts (bzw. der sich axial verjüngende Teil der Außenfläche des Fasenabschnitts) auf einem Konus mit einem Öffnungswinkel in einem Bereich zwischen ungefähr 50° und ungefähr 130°, insbesondere mit einem Öffnungswinkel in einem Bereich zwischen ungefähr 60° und ungefähr 120°, weiter insbesondere mit einem Öffnungswinkel in einem Bereich zwischen ungefähr 80° und ungefähr 100°, liegen. Insbesondere ein Fasenöffnungswinkel bei dem Antrieb von ungefähr 90° (was einer Fase von ungefähr 45° bezogen auf eine Schraubenachse entspricht) hat sich als besonders vorteilhaft herausgestellt. In entsprechender Weise kann bei dem Antriebselement die Außenfläche des Fasenabschnitts (bzw. der sich axial verjüngende Teil der Außenfläche des Fasenabschnitts) auf einem Konus mit einem Öffnungswinkel in einem Bereich zwischen ungefähr 50° und ungefähr 130°, insbesondere mit einem Öffnungswinkel in einem Bereich zwischen ungefähr 60° und ungefähr 120°, weiter insbesondere mit einem Öffnungswinkel in einem Bereich zwischen ungefähr 80° und ungefähr 100°, liegen. Insbesondere ein Fasenöffnungswinkel bei dem Antriebselement von ungefähr 90° (was einer Fase von ungefähr 45° bezogen auf eine Drehachse des Antriebselements entspricht) hat sich als besonders vorteilhaft herausgestellt. Dadurch kann bei einer ausreichend starken axialen Länge des mit Hohlflügeln versehenen Abschnitts des Antriebs eine hohe und reproduzierbare Kraftübertragung vom Antriebselement auf die Schraube ohne mechanische Überlastung der Schraube bewirkt werden.

Gemäß einem exemplarischen Ausführungsbeispiel der Schraube kann ein Öffnungswinkel des Hohlkegelabschnitts in einem Bereich zwischen ungefähr 100° und ungefähr 170°, insbesondere in einem Bereich zwischen ungefähr 110° und ungefähr 170°, weiter insbesondere in einem Bereich zwischen ungefähr 130° und ungefähr 150°, liegen. In entsprechender Weise kann bei dem Antriebselement ein Öffnungswinkel des Kegelabschnitts in einem Bereich zwischen ungefähr 100° und ungefähr 170°, insbesondere in einem Bereich zwischen ungefähr 110° und ungefähr 170°, weiter insbesondere in einem Bereich zwischen ungefähr 130° und ungefähr 150°, liegen. Ein Winkel von jeweils ca. 140° hat sich als sehr vorteilhaft erwiesen. Indem der bodenseitige Kegelabschnitt mit einem ausreichend großen Öffnungswinkel ausgebildet wird, kann die Restbodendicke zwischen Boden des Antriebs und Außenseite des Schraubenkopfs so groß gehalten werden, dass ein Schraubenbruch beim Drehbetätigen zuverlässig unterbunden ist.

Gemäß einem exemplarischen Ausführungsbeispiel der Schraube kann ein Verhältnis zwischen einem Hohlflügelaußendurchmesser (also einem Durchmesser an der Stelle der Hohlflügel, an der diese maximal weit von der Schraubenachse entfernt sind) und einem Hohlflügelinnendurchmesser (also einem Durchmesser an der Stelle der Hohlflügel, an der diese minimal weit von der Schraubenachse entfernt sind) größer als ungefähr 1,42 sein, insbesondere größer als ungefähr 1,44 sein, weiter insbesondere in einem Bereich zwischen ungefähr 1,43 und ungefähr 1,60 liegen. In entsprechender Weise kann bei dem Antriebselement ein Verhältnis zwischen einem Flügelaußendurchmesser (also einem Durchmesser an der Stelle der Flügel, an der diese maximal weit von der Drehachse des Antriebselements entfernt sind) und einem Flügelinnendurchmesser (also einem Durchmesser an der Stelle der Flügel, an der diese minimal weit von der Drehachse des Antriebselements entfernt sind) größer als ungefähr 1,42 sein, insbesondere größer als ungefähr 1,44 sein, weiter insbesondere in einem Bereich zwischen ungefähr 1,43 und ungefähr 1,60 liegen. Die genannten Verhältnis sollten vorzugsweise größer als 1,40 sein, um eine zusätzliche Verbesserung der Führungs- und Zentrierungseigenschaften bei großer Drehmomentübertragung zu erreichen.

Gemäß einem exemplarischen Ausführungsbeispiel der Schraube kann an einem radial innersten Abschnitt von einem oder mehreren der Hohlflügel eine jeweilige Flügelkante (also eine Stelle mit einer sprunghaften Änderung der Steigung im Flügelverlauf) gebildet sein. In entsprechender Weise kann bei dem Antriebselement an einem radial innersten Abschnitt von zumindest einem Teil der Flügel eine jeweilige Flügelkante gebildet sein, wobei die Flügelkante insbesondere durch zwei aneinandergrenzende und im Grenzbereich krümmungsfreie Flächenabschnitte gebildet ist, weiter insbesondere mit einem Flügelkantenwinkel in einem Bereich zwischen ungefähr 120° und ungefähr 160°. Im Gegensatz zu einer vollkommen runden Ausbildung der Hohlflügel/Flügel am radial innersten Abschnitt kann durch das Ausbilden einer Flügelkante am Schnittpunkt zweier zumindest abschnittsweise linearer Strecken mit einem vorzugsweise stumpfen Winkel (zum Beispiel in einem Bereich zwischen 120° und 160°) eine Flügelverbreiterung gefördert werden, um das Verhältnis von Flügelaußendurchmesser zu Flügelkerndurchmesser ausreichend groß zu gestalten. Dadurch kann auch ein unerwünschtes Aufsetzen des Antriebselements auf dem Boden des Antriebs unwahrscheinlicher gemacht werden, was eine Störung der Führung der Schraube durch das Antriebselement bewirken würde.

Gemäß einem exemplarischen Ausführungsbeispiel der Schraube können entlang des Kreisumfangs sechs Flügel angeordnet sein (alternativ sind aber zum Beispiel auch vier oder acht entlang des Kreisumfangs angeordnete Flügel möglich). In entsprechender Weise können bei dem Antriebselement entlang des Kreisumfangs sechs Flügel angeordnet sein. Die resultierende Form an der Außenseite des Antriebs und an einer korrespondierenden Stelle des Antriebselements kann dann zum Beispiel einem Innensechsrund bzw. einer Torx®-Geometrie entsprechen.

Gemäß einem exemplarischen Ausführungsbeispiel der Schraube kann der Schraubenkopf ein Senkkopf sein. Vorteilhaft kann beim Ausbilden des Schraubenkopfs als Senkkopf ein Öffnungswinkel der Außenfläche des Senkkopfs ausgebildet werden, um von einem Öffnungswinkel eines dem Fasenabschnitt der Schraube zugeordneten Konus um vorzugsweise weniger als 10°, weiter vorzugsweise weniger als 5°, abzuweichen. Damit kann eine unerwünschte übermäßige Verringerung der Restbodendicke der Schraube unterbunden werden und somit eine bruchsichere Schraube bereitgestellt werden.

Gemäß einem exemplarischen Ausführungsbeispiel kann die Schraube, insbesondere eine Holzschraube oder eine Metallbohrschraube, als selbstbohrende (d.h. sich vorbohrungsfrei ein Loch in dem Untergrund bohrende) und/oder selbstschneidende (d.h. sich mit oder ohne Vorbohrung ein Gewinde in dem Untergrund schneidende) Schraube ausgebildet sein. Besonders bei solchen Schrauben sind die Anforderungen an die Führbarkeit und Zentrierbarkeit sowie an den Schutz gegen Abscheren beim Wirken der großen Kräfte beim Selbstbohren bzw. Selbstschneiden besonders wichtig und die erfindungsgemäßen Maßnahmen somit besonders wirkungsvoll.

Gemäß einem exemplarischen Ausführungsbeispiel kann das Antriebselement als Bit ausgebildet sein. Unter einem Bit versteht man insbesondere eine auswechselbare Schraubendreherklinge ohne Griff für ein bestimmtes Schraubenkopfprofil. Die zum Beispiel sechseckige Aufnahme kann so geformt sein, dass sie formschlüssig in einen entsprechend geformten Bithalter (zum Beispiel eines Handstücks eines Schraubendrehers oder eines Akkuschraubers) eingesetzt werden kann.

Gemäß einem anderen exemplarischen Ausführungsbeispiel kann das Antriebselement als Schraubenschlüssel ausgebildet sein. Ein Schraubenschlüssel kann als ein (zum Beispiel im Wesentlichen L-förmiges) Handwerkzeug zum Anziehen oder Lösen von Schrauben mit passendem Antriebsprofil bezeichnet werden. Ein solcher Schraubenschlüssel kann auf das Antriebsprofil in dem Schraubenkopf gesteckt und im Drehsinn betätigt werden.

Gemäß noch einem anderen exemplarischen Ausführungsbeispiel kann das Antriebselement als Schraubendreher mit einem von einem Benutzer drehbetätigbaren Handstück ausgebildet sein, welches Handstück sich an den Flügelabschnitt anschließt. Ein solcher Schraubendreher kann ein Werkzeug mit bestimmter Kopfform sein, mit dem Schrauben in Untergründe bzw. Werkstoffe hinein- oder herausgeschraubt werden.

Gemäß einem exemplarischen Ausführungsbeispiel können die Schraube und das Antriebselement derart aufeinander angepasst sein, dass beim Eingreifen des Antriebselements in den Antrieb der Schraube eine direkte Berührung einer Wandbegrenzung des Hohlvertiefungsabschnitts durch den Vertiefungsabschnitt verunmöglicht ist. Zum Beispiel berühren sich im Drehbetrieb nur die Schraubenkopfwandung am Hohlflügelabschnitt und der Flügelabschnitt sowie die Schraubenkopfwandung am Fasenabschnitt der Schraube und der Fasenabschnitt des Antriebselements, nicht aber die Wandbegrenzung des Hohlvertiefungsabschnitts und der Vertiefungsabschnitt. Dadurch kann zum Beispiel stets ein Mindestabstand von zum Beispiel 0,2 mm bis 0,4 mm zwischen der Spitze des Antriebselements und einem Boden des Antriebs der Schraube aufrechterhalten bleiben. Ein dadurch unterbundenes Berühren würde die Führung der Schraube durch das Antriebselement negativ beeinträchtigen.

Die beschriebene Architektur zum Ausbilden eines Antriebs für eine Schraube ist mit verschiedenartigen Schraubentypen sowie mit verschiedenartigen Schraubenkopfformen kompatibel. Als Schrauben können sowohl solche mit Vollgewinde oder Teilgewinde am Schraubenschaft oder auch Bohrschrauben verwendet werden. Besonders vorteilhaft ist die erfindungsgemäße Architektur für selbstbohrende Schrauben einsetzbar, da bei diesen eine zuverlässige Führung und Zentrierung beim Setzen besonders wichtig ist. Hinsichtlich der Kopfformen erfindungsgemäßer Schrauben können sowohl Senkkopfschrauben als auch solche mit Kopfformen wie die der AMO-Schraube der Firma Würth eingesetzt werden. Mögliche Untergründe, in welche die Schraube eingebracht werden kann, sind Holz, Stein, Beton, Metall, etc.

Gemäß einem exemplarischen Ausführungsbeispiel kann somit anschaulich der Zentralbereich des Antriebs bzw. des Antriebselements verlängert werden, kann eine (zum Beispiel 45°-) Fase angebracht werden und dadurch eine axiale Verlängerung der Flügel bzw. der Hohlflügel erreicht werden. Auch eine radiale Verbreiterung der Flügel bzw. der Hohlflügel ist möglich. Die Flanken bzw. Enden der Vertiefungen können in einem Winkel von zum Beispiel 140° angeordnet werden, um eine Kompatibilität mit einem Innensechsrund-Bit herzustellen.

Vorteilhaft ist auch eine Verrundung der vorderen Kontur, zum Beispiel mit einem Radius in einem Bereich zwischen 0,1 mm und 0,4 mm, wodurch die Standmenge eines Pressstempels zum Herstellen der Schraube erhöht werden kann.

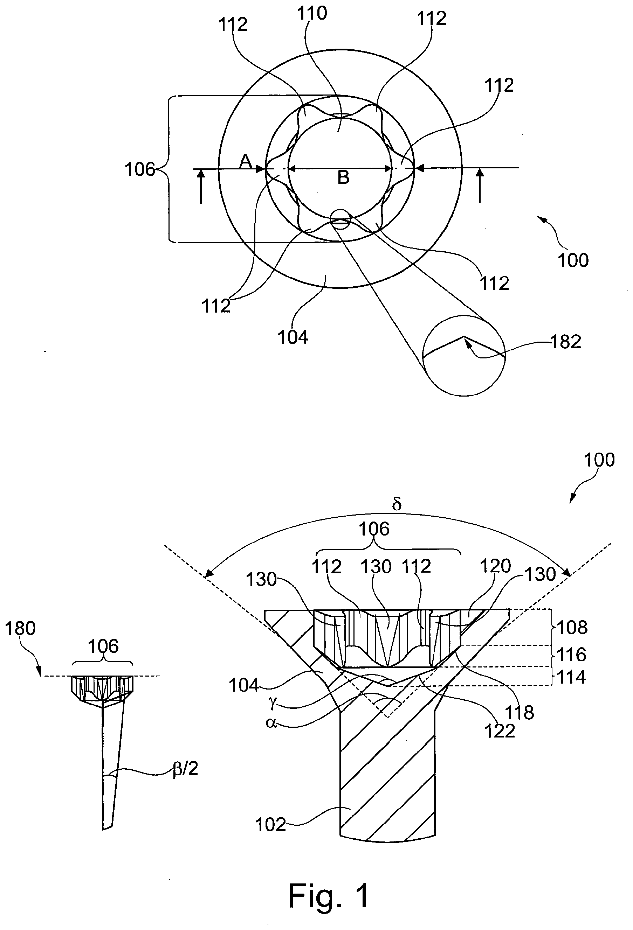

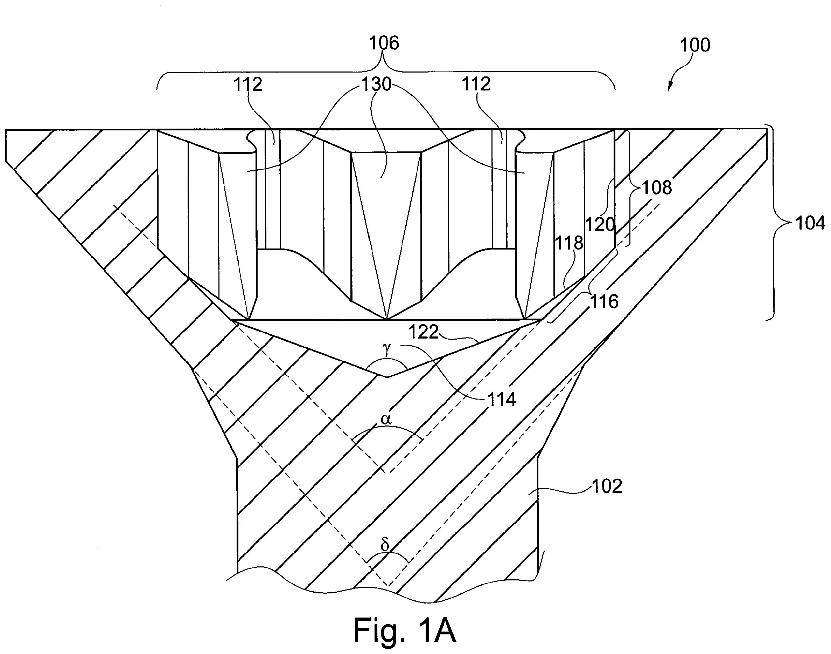

Gemäß einem exemplarischen Ausführungsbeispiel hat der Antrieb der Schraube in einer Querschnittsansicht eine derartige Gestalt, dass er ausgehend von einem schraubenaußenseitigen Hohlflügelabschnitt ein erstes Mal zu einem sich direkt (das heißt ohne weiteren Zwischenabschnitt) anschließenden Fasenabschnitt nach innen hin abknickt und ausgehend von dem Fasenabschnitt ein zweites Mal zu einem sich daran direkt (das heißt ohne weiteren Zwischenabschnitt) anschließenden schraubeninnenseitigen Hohlvertiefungsabschnitt hin abknickt, der wiederum auf einen schraubeninnenseitigen Endpunkt zuläuft. In der Querschnittsansicht können der Hohlflügelabschnitt, der Fasenabschnitt und der Hohlvertiefungsabschnitt jeweils eine geradlinige Außenkontur haben. Von außen nach innen kann der Antrieb somit im Querschnitt eine durchgehend konkave Struktur ohne abschnittsweise konvexe Zwischenbereiche bilden (vergleiche zum Beispiel Figur 1). Dadurch ist eine einfache Bauform mit einer axial langen Wirkverbindung zu einem Antriebselement geschaffen, ohne dass eine Restbodendecke des Schraubenkopfs zu gering wird (was wiederum die Gefahr unerwünschten Abscherens reduziert). Da sich die Hohlflügel bzw. deren Ausleger durch die beschriebene Geometrie radial weit außen befinden können, kann mit einer solchen Schraube eine besonders hohe Menge an Drehmoment übertragen werden.

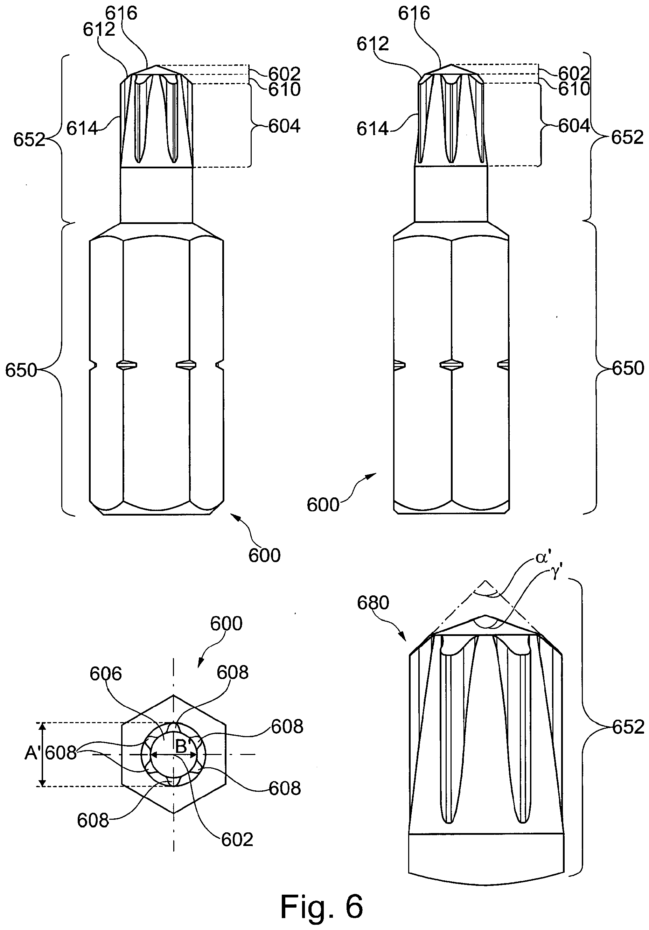

Gemäß einem exemplarischen Ausführungsbeispiel hat in entsprechender Weise das Antriebselement in einer Querschnittsansicht eine derartige Gestalt, dass es ausgehend von einem im Betrieb schraubenaußenseitigen Flügelabschnitt ein erstes Mal zu einem sich direkt (das heißt ohne weiteren Zwischenabschnitt) anschließenden Fasenabschnitt nach innen hin abknickt und ausgehend von dem Fasenabschnitt ein zweites Mal zu einem sich daran direkt (das heißt ohne weiteren Zwischenabschnitt) anschließenden, im Betrieb schraubeninnenseitigen Vertiefungsabschnitt hin abknickt, der wiederum auf einen im Betrieb schraubeninnenseitigen Endpunkt zuläuft. In der Querschnittsansicht können der Flügelabschnitt, der Fasenabschnitt und der Vertiefungsabschnitt jeweils eine geradlinige Außenkontur haben. Von außen nach innen kann das Antriebselement somit im Querschnitt eine durchgehend konvexe Struktur ohne abschnittsweise konkave Zwischenbereiche bilden (vergleiche zum Beispiel Figur 6).

Im Folgenden werden exemplarische Ausführungsbeispiele der vorliegenden Erfindung mit Verweis auf die folgenden Figuren detailliert beschrieben.
Figur 1 zeigt eine Draufsicht und eine Querschnittsansicht einer Schraube gemäß einem exemplarischen Ausführungsbeispiel der Erfindung.
Figur 1A zeigt eine vergrößerte Querschnittsansicht eines Schraubenkopfs der Schraube mit Antrieb gemäß Figur 1.
Figur 2 zeigt eine Draufsicht und eine Querschnittsansicht einer Schraube gemäß einem anderen exemplarischen Ausführungsbeispiel der Erfindung.
Figur 3 zeigt eine Draufsicht und eine Querschnittsansicht einer Schraube gemäß noch einem anderen exemplarischen Ausführungsbeispiel der Erfindung.
Figur 4 zeigt eine Draufsicht und zwei Seitenansichten eines Werkzeugs zum Herstellen einer Schraube gemäß einem exemplarischen Ausführungsbeispiel der Erfindung.
Figur 5 zeigt einen vergrößerten Abschnitt eines Flügelbildungsprofils des Werkzeugs gemäß Figur 4 zum Bilden von Hohlflügeln eines Antriebs einer Schraube gemäß einem exemplarischen Ausführungsbeispiel der Erfindung.
Figur 5A zeigt eine vergrößerte Querschnittsansicht des Werkzeugs gemäß Figur 4.
Figur 6 zeigt zwei Seitenansichten und eine Draufsicht eines Antriebselements zum Antreiben einer Schraube gemäß einem exemplarischen Ausführungsbeispiel der Erfindung.

Gleiche oder ähnliche Komponenten in unterschiedlichen Figuren sind mit gleichen Bezugsziffern versehen.

Bevor bezugnehmend auf die Figuren exemplarische Ausführungsbeispiele der Erfindung beschrieben werden, sollen noch einige allgemeine Aspekte der Erfindung erläutert werden:
Bei herkömmlichen Schrauben besteht häufig die Limitierung, dass viele Antriebsgrößen erforderlich sind. Wenn das Verhältnis zwischen einer Eindringtiefe eines Kegels oder Kegelstumpfs eines Antriebselements zum Durchmesser des Kegels oder Kegelstumpfs an der Spitze zu klein wird (zum Beispiel <0,55 wird), kann die Führung und Zentrierung der Schraube durch das Antriebselement kritisch werden. Ferner ist bei im Verhältnis zum Antriebselement großen Schraubendurchmessern das Bruchdrehmoment des Antriebselements häufig klein. Auch kann die Restbodendicke (d.h. ein kleinster Abstand zwischen Innenantrieb und Kopfaußenseite) kritisch klein werden, wenn der Eintrittsdurchmesser bzw. die Eindringtiefe zu groß ist. Ferner kann - insbesondere bei selbstbohrenden Schrauben - mehr Drehmomentübertragung gewünscht sein, als dies mit herkömmlichen Schrauben erreichbar ist.

Im Weiteren wird bezugnehmend auf die Figuren ein Schraubenkonzept gemäß exemplarischen Ausführungsbeispielen beschrieben, welches die obigen Limitierungen zumindest teilweise überwindet bzw. die genannten Anforderungen erfüllt.

**Figur 1** zeigt eine Draufsicht und eine Querschnittsansicht einer Schraube 100 gemäß einem exemplarischen Ausführungsbeispiel der Erfindung. **Figur 1A** zeigt eine vergrößerte Querschnittsansicht eines Teilbereichs der Schraube 100 gemäß Figur 1.

Die in Figur 1 und Figur 1A gezeigte metallische Schraube 100 ist zum Einbringen in einen in der Figur nicht gezeigten Untergrund (zum Beispiel eine Wand) ausgebildet und mittels eines in Figur 6 gezeigten Antriebselements 600 drehantreibbar. Die zum Beispiel selbstbohrende Schraube 100 weist einen nur schematisch bzw. abschnittsweise dargestellten Schraubenschaft 102 auf, der sich in einem Endabschnitt zum Schraubenende hin (nicht gezeigt) zu einer Schraubenspitze hin verjüngen kann. Eine Außenkontur des Schraubenschafts 102 kann ein Gewinde, insbesondere ein selbstschneidendes Gewinde, aufweisen, um sich in dem Untergrund, in dem die Schraube 100 zu montieren ist, ein Gewinde zu schneiden.

An den Schraubenschaft 102 schließt sich axial - hier direkt (das heißt ohne Zwischenelement oder Zwischenabschnitt) oder alternativ indirekt (das heißt mit Zwischenelement oder Zwischenabschnitt) - ein hier als Senkkopf ausgebildeter Schraubenkopf 104 an, in dem ein Antrieb 106 (d.h. eine in spezieller Form begrenzte Aussparung in dem Schraubenkopf 104) zum Drehantreiben der Schraube 100 mittels des in Figur 6 gezeigten Antriebselements 600 ausgebildet ist. Durch den Antrieb 106 in dem Schraubenkopf 104 ist ein Antriebsprofil gebildet, welches das Antriebselement 600 mit Spiel formschlüssig in Eingriff nehmen kann, um eine Antriebskraft auf die Schraube 100 übertragen zu können.

Wie in der Draufsicht und der Schnittansicht von Figur 1 gut zu erkennen ist, weist der Antrieb 106 einen schraubenaußenseitigen Hohlflügelabschnitt 108 mit kreisförmigem Hohlkern 110 und sechs entlang des Kreisumfangs symmetrisch angeordneten Hohlflügeln 112 auf. Diese Kontur kann auch als Innensechsrund bezeichnet werden. Ferner weist der Antrieb 100 einen schraubeninnenseitigen Hohlkegelabschnitt 114 auf, der einen Boden des Antriebs 106 definiert.

An einem axialen Übergang zwischen dem Hohlflügelabschnitt 108 und dem Hohlkegelabschnitt 114 weist der Antrieb 100 einen Fasenabschnitt 116 auf, dessen im Querschnitt erkennbare Außenfläche 118 gegenüber einer im Querschnitt erkennbaren Außenfläche 120 des Hohlflügelabschnitts 108 von der Schraubenachse weg und gegenüber einer im Querschnitt erkennbaren Außenfläche 122 des Hohlkegelabschnitts 114 in Richtung der Schraubenachse verkippt bzw. abgewinkelt ist. Ausläufer der Hohlflügel 112 erstrecken sich dabei bis in den Fasenabschnitt 116 hinein. Im Gegensatz dazu ist der Hohlkegelabschnitt 114 von Hohlflügeln 112 frei und glatt. Die Hohlflügel 112 haben von einem schraubenaußenseitigen Ende des Hohlflügelabschnitts 108 bis zum Anfang des Fasenabschnitts 116 einen konstanten Außendurchmesser A. Der Hohlkern 110 des Hohlflügelabschnitts 108 verjüngt sich schraubeninnenseitig hin konisch, was anhand von Schrägflächen 130 ersichtlich ist. Insofern kann der Hohlflügelabschnitt 108, von den Hohlflügeln 112 abgesehen, als teilweise kegelstumpfförmig angesehen werden.

Wie anhand Figur 1, vergleiche hierzu auch eine Detailansicht 180 des Antriebs 106, und Figur 1A gut zu erkennen ist, ist ein Öffnungswinkel α eines von dem Fasenabschnitt 116 extrapolierten Konus (siehe gestrichelte Linien) größer als ein Öffnungswinkel β eines von dem Hohlflügelabschnitt 108 extrapolierten Konus (in der Detailansicht 180 ist β/2 zu erkennen). Der Öffnungswinkel β beträgt zum Beispiel ungefähr 12° und kann allgemeiner zum Beispiel in einem Bereich zwischen 5° und 20° liegen. Ferner ist ein Öffnungswinkel γ des Hohlkegelabschnitts 114 größer als der Öffnungswinkel α des von dem Fasenabschnitt 116 extrapolierten Konus. Die Außenfläche 118 des Fasenabschnitts 116 liegt auf einem extrapolierten Konus (siehe gestrichelte Linie) mit dem Öffnungswinkel α von ungefähr 90°. Die Neigung der Außenfläche 118 des Fasenabschnitts 116 zur Vertikalen von Figur 1 bzw. zur Schraubenachse beträgt daher ungefähr 45°, so dass von einer 45°-Fase gesprochen werden kann. Der Öffnungswinkel γ des Hohlkegelabschnitts 114 beträgt etwa 140°. Die Neigung der Außenfläche 122 des Hohlkegelabschnitts 114 zur Vertikalen gemäß Figur 1 bzw. zur Schraubenachse beträgt daher ungefähr 70°. Der Schraubenkopf 104 ist ein Senkkopf mit einem Öffnungswinkel δ von ungefähr 90°. Somit verläuft die Außenfläche 118 in etwa parallel zu einer Außenfläche des als Senkkopf ausgebildeten Schraubenkopfs 104.

Der Draufsicht in Figur 1 ist ein Hohlflügelaußendurchmesser A und ein Hohlflügelinnendurchmesser (oder Flügel-Kerndurchmesser) B zu entnehmen. Ein Verhältnis zwischen dem Hohlflügelaußendurchmesser A und dem Hohlflügelinnendurchmesser B beträgt ungefähr 1,45.

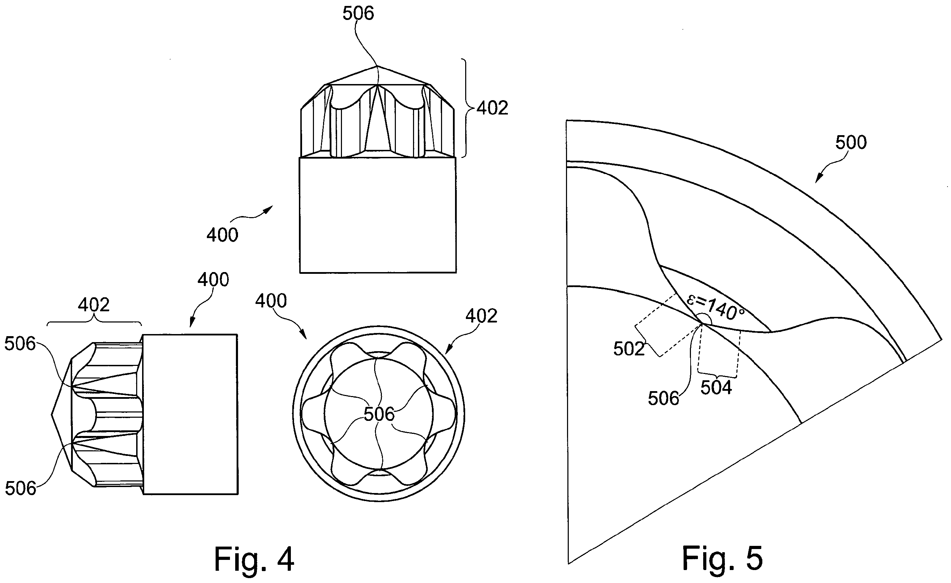

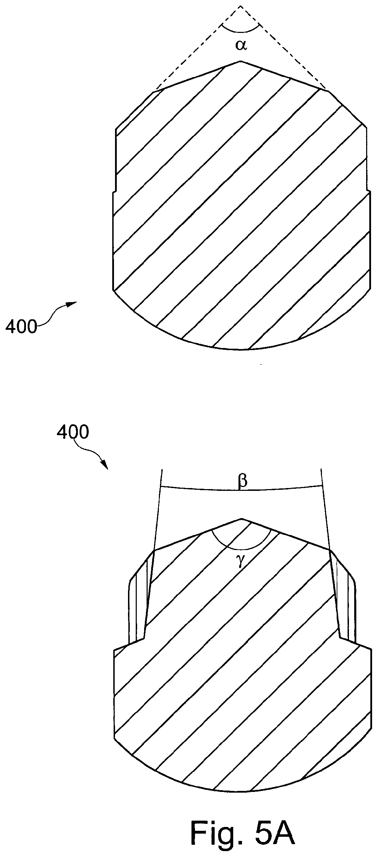

Wenn zum Herstellen der Schraube 100 gemäß Figur 1 und Figur 1A ein Werkzeug 400 gemäß Figur 4 und Figur 5 eingesetzt wird, so haben die Hohlflügel 112 an der mittelpunktnächsten Stelle eine Flügelkante 182, anstelle einer kantenfreien Krümmung. Wie bezugnehmend auf Figur 4 und Figur 5 beschrieben wird, kann dadurch ein unerwünschtes Aufsetzen des Antriebselements 600 auf dem Boden des Antriebs 106 im Schraubenkopf 104 vermieden werden.

Die in Figur 1 gezeigte Schraube 100 hat einen Außendurchmesser von ø3,5 mm.

Gegenüber herkömmlichen Schraubenkonzepten kann mit der Schraube 100 eine axiale Verlängerung des kegelstumpfartigen Hohlflügelabschnitts 108 erreicht werden, wobei auch der Kerndurchmesser B (d.h. der Innendurchmesser des Innensechsrundprofiles) ausreichend gering gehalten werden kann. Indem infolgedessen das Verhältnis A/B einen ausreichend hohen Wert von zum Beispiel ungefähr 1,45 annehmen kann (insbesondere außerhalb von Toleranzen größer als 1,4 sein kann), kann der Kegelstumpf vorne an der Spitze anschaulich radial kleiner werden. Diese Verlängerung kann durch die Anbringung des Fasenabschnitts 116 (entsprechend einem Öffnungswinkel α=90°), d.h. der Fase von 45° gegenüber einer axialen Schraubenrichtung, in der Schraube 100 auf die gleiche Restbodendicke hin angepasst bzw. kompensiert werden. Dies führt zu einer verbesserten Stabilität sowie Führung und Zentrierung der Schraube 100 bei einer Drehbetätigung durch das Antriebselement 600, da das Verhältnis der Eindringtiefe des Kegelstumpfs zum Durchmesser des Kegelstumpfs an der Spitze größer wird. Ferner erfolgt eine verbesserte Drehmomentübertragung, da mehr Kraftübertragungsfläche zur Verfügung steht. Durch eine verlängerte Ausgestaltung des Zentralbereichs des zum Beispiel als Bit ausgestalteten Antriebselements 600, die Reduzierung des B-Maßes und das Vorsehen des Fasenabschnitts 118 kann somit eine große Drehmomentübertragung vom Antriebselements 600 auf die Schraube 100 ermöglicht werden (bei gleicher Eindringtiefe außen an der begrenzenden Antriebstiefe). Durch die Verlängerung des Kegelstumpfes geht auch eine axiale Verlängerung der Hohlflügel 112 bezogen auf die Mittellinie der Flügelfläche einher, was die verbesserte Drehmomentübertragung weiter fördert. Dadurch kann auch bei einer Schraube 100, die im Verhältnis zur Antriebsgröße relativ klein ist, eine sichere Führung und Zentrierung der Schraube 100 mit größerem Antrieb 106 (bzw. mit größerer Bitgröße) erreicht werden. Durch die radial und axiale Vergrößerung der Hohlflügel 112 ist das Antriebselement 600 (zum Beispiel der Bit) bei Verschrauben von großen, langen Schrauben 100 vor einem unerwünschten Abscheren geschützt. Ein weiterer Vorteil ist, dass eine Schraube 100 mit dem beschriebenen Antrieb 106 auch von herkömmlichen Bits angetrieben werden kann (zum Beispiel von herkömmlichen AW-Bits). Auch ist ein Verschrauben solcher Schrauben 100 mit einem TX-Bit (Torx®) ist möglich.

Eine Fase (gegenüber einer Schraubenachse) am Flügelende des Antriebselements 600 bzw. des Antriebs 106 ist vorteilhaft, weil diese an die Form eines Senkkopfes als Schraubenkopf 104 angepasst sein kann.

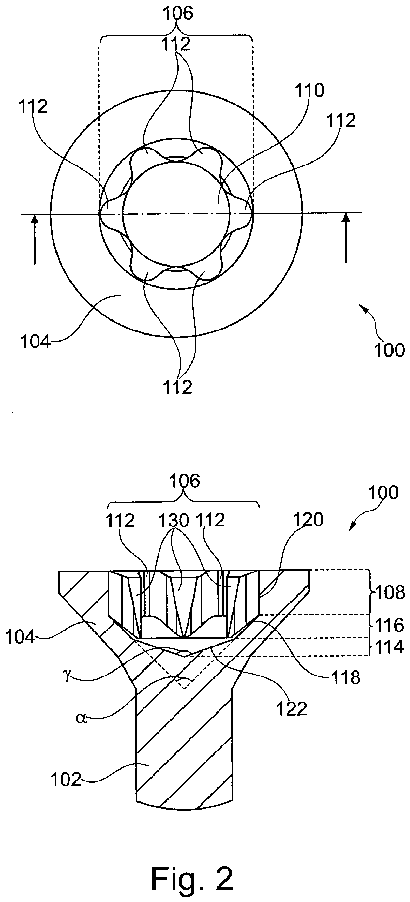

**Figur 2** zeigt eine Draufsicht und eine Querschnittsansicht einer Schraube 100 gemäß einem anderen exemplarischen Ausführungsbeispiel der Erfindung. Die in Figur 2 gezeigte Schraube 100 hat einen Außendurchmesser von ø6 mm.

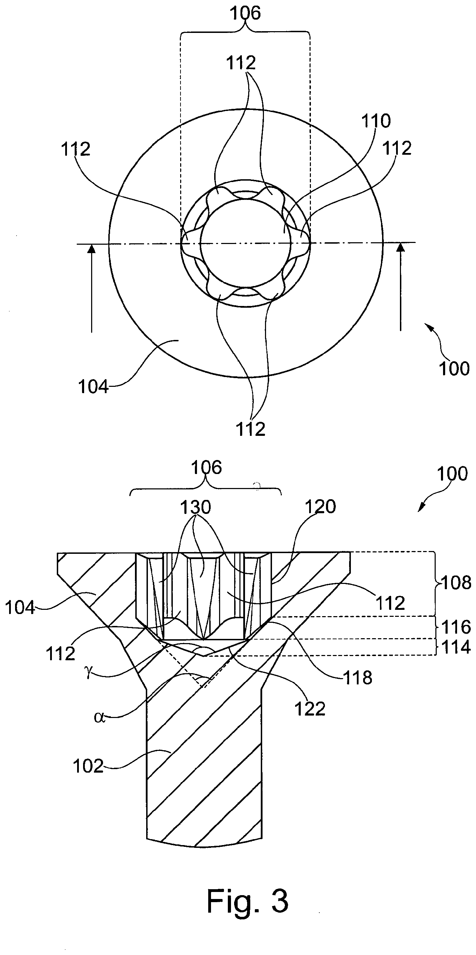

**Figur 3** zeigt eine Draufsicht und eine Querschnittsansicht einer Schraube 100 gemäß noch einem anderen exemplarischen Ausführungsbeispiel der Erfindung. Die in Figur 3 gezeigte Schraube 100 hat einen Außendurchmesser von ø8 mm.

**Figur 4** zeigt eine Draufsicht und zwei Seitenansichten eines Werkzeugs 400 zum Herstellen einer Schraube 100 gemäß einem exemplarischen Ausführungsbeispiel der Erfindung. **Figur 5** zeigt einen vergrößerten Abschnitt eines Flügelbildungsprofils 500 des Werkzeugs 400 gemäß Figur 4 zum Bilden von Hohlflügeln 112 einer Schraube 100 gemäß einem exemplarischen Ausführungsbeispiel der Erfindung. **Figur 5A** zeigt eine vergrößerte Querschnittsansicht des Werkzeugs 400 gemäß Figur 4.

Das Werkzeug 400 wird verwendet, um in einem Schraubenrohling einen Antrieb 106 mit der in Figur 1 bis Figur 3 gezeigten Geometrie zu bilden. Dies erfolgt durch ein Kaltmassivumformen von Material des Schraubenkopfs 104 mittels des Werkzeugs 400, optional gefolgt von einem spanenden Nachbearbeitungsschritt. Die Formgebung eines Werkzeugkopfs 402 des Werkzeugs 400 ist somit im Wesentlichen invers zu jener des Antriebs 106 der Schraube 100.

Wie oben beschrieben, kann gemäß einem exemplarischen Ausführungsbeispiel der Erfindung das B-Maß gemäß Figur 1 gegenüber einer herkömmlichen Schraube mit AW-Antrieb verringert werden. Durch diese Verringerung des B-Maßes kann es bei einem Innensechsrund-Bit unter ungünstigen Umständen zum Aufsetzen desselben in Bereichen kommen, in denen der Antrieb 106 durch den Kegelstumpf noch nicht auf das herkömmliche B-Maß aufgefüllt ist. Um ein solches Aufsetzen (das die Momentübertragung auf die Schraube 100 durch das Antriebselement 600 negativ beeinflussen kann) zu unterdrücken, kann die Flügelbreite der Außensechsrunde verbreitert werden und können unter Ausbildung einer Kante 506 statt eines kreisförmigen Radius der herkömmlichen Form zwei geradlinige Strecken 502, 504, die miteinander einen Winkel ε (von zum Beispiel 140°) einschließen, mit dazu tangentialen, vergleichsweise kleinen Radien eingefügt werden.

Die Schraube 100 mit dem beschriebenen Antrieb 106 erlaubt eine Reduzierung des B-Maßes und lässt sich dennoch mit nur geringem Werkzeugverschleiß durch Fließpressen umformen. Mit einem Antrieb 106 gemäß einem exemplarischen Ausführungsbeispiel kann ein großer Bereich des reduzierten B-Maßes durch den innenliegenden Konus wieder aufgefüllt werden. Im vorderen spitzenseitigen Bereich ist das Verhältnis durch die Anbringung der Fase reduziert. Durch die bloße Verringerung des B-Maßes würde es bei einem Innensechsrundbit zum Aufsetzen desselben in Bereichen kommen können, wo der Schraubenantrieb nicht auf ein vorheriges B-Maß aufgefüllt ist. Um dieses Aufsetzen zu unterbinden, kann die Flügelbreite des Außensechsrunds erhöht werden und können statt des Innenradius der herkömmlichen Form zwei (vorzugsweise geradlinige oder zumindest annähernd geradlinige) Strecken 502, 504 (die miteinander einen Winkel von ungefähr 140° einschließen können) dazu tangential in kleineren Radien eingefügt werden. Dies ist ein weiterer Grund, warum das Verbreitern der Hohlflügel 112 in der in Figur 1 gezeigten Weise vorteilhaft sein kann.

**Figur 6** zeigt zwei Seitenansichten und eine Draufsicht eines als Bit ausgebildeten Antriebselements 600 zum Antreiben einer Schraube 100 gemäß einem exemplarischen Ausführungsbeispiel der Erfindung.

Das Antriebselement 600 enthält einen Einsteckabschnitt 650 zum Einstecken in einen Akkuschrauber oder dergleichen, um mittels eines Antriebsabschnitt 652 des Antriebselements 600 eine in Figur 1 bis Figur 3 gezeigte Schraube 100 drehanzutreiben, um die Schraube 100 in einen Untergrund einzubringen. Alternativ kann der Antriebsabschnitt 652 auch als Endabschnitt eines in der Figur nicht gezeigten Schraubenschlüssels oder Schraubendrehers ausgebildet sein, der an einem Handgriff von einem Benutzer drehbetrieben werden kann, um die Schraube 100 in Untergrund einzubringen.

Das Antriebselement 600 weist einen Flügelabschnitt 604 mit kreisförmigem Kern 606 und sechs entlang des Kreisumfangs vorgesehenen Flügeln 608, einen endseitigen Kegelabschnitt 602 und einen Fasenabschnitt 610 an einem Übergang zwischen dem Flügelabschnitt 604 und dem Kegelabschnitt 602 auf. Eine Außenfläche 612 des Fasenabschnitts 610 ist gegenüber einer Außenfläche 614 des Flügelabschnitts 604 und gegenüber einer Außenfläche 616 des Kegelabschnitts 602 abgewinkelt. Ausläufer der Flügel 608 erstrecken sich bis in den Fasenabschnitt 610 hinein. Der Kegelabschnitt 602 ist hingegen von Flügeln 608 frei und glatt. Die Flügel 608 haben von einem an den Einsteckabschnitt 650 angrenzenden Ende des Flügelabschnitts 604 bis zum Anfang des Fasenabschnitts 610 einen konstanten Außendurchmesser. Der Kern des Flügelabschnitts 604 dagegen verjüngt sich zum Kegelabschnitt 602 hin konisch.

Ein Öffnungswinkel α' eines von dem Fasenabschnitt 610 extrapolierten Konus (siehe gestrichelte Linie in Detailansicht 680) ist größer als ein Öffnungswinkel (dieser entspricht im Wesentlichen dem Öffnungswinkel, der in Figur 1 als β bezeichnet wird, und ist in Figur 6 nicht gezeigt) eines von dem Flügelabschnitt 604 extrapolierten Konus. Ein Öffnungswinkel γ' des Kegelabschnitts 602 ist größer als der Öffnungswinkel α' des von dem Fasenabschnitt 610 extrapolierten Konus. Die Außenfläche 612 des Fasenabschnitts 610 liegt also auf einem Konus mit dem Öffnungswinkel α' von 90°. Der Öffnungswinkel γ' des Kegelabschnitts 602 beträgt im gezeigten Ausführungsbeispiel 140°.

Ein Verhältnis zwischen einem Flügelaußendurchmesser A' und einem Flügelinnendurchmesser B' beträgt in dem gezeigten Ausführungsbeispiel ungefähr 1,45.

Eine Schraube 100 gemäß Figur 1 bis Figur 3 und ein damit zusammenwirkendes bzw. diese drehantreibendes Antriebselement 600 bilden eine erfindungsgemäße Anordnung und sind derart aufeinander angepasst, dass beim Eingreifen des Antriebselements 600 in den Antrieb 106 der Schraube 100 eine direkte Berührung zwischen einer Wandbegrenzung des Hohlkegelabschnitts 114 und dem Kegelabschnitt 602 mechanisch verunmöglicht ist und stets ein Mindestabstand von zum Beispiel 0,2 mm bis 0,4 mm zwischen der Spitze des Antriebselements 600 und einem Boden des Antriebs 106 der Schraube 100 aufrechterhalten bleibt. Ein dadurch unterbundenes Berühren würde die Führung der Schraube 100 durch das Antriebselement 600 negativ beeinträchtigen. Die genannte Wirkung kann durch eine entsprechende Formgebung und Dimensionierung der Schraube 100 und des Antriebselements 600 bewerkstelligt werden.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Schraube (100) zum Einbringen in einen Untergrund, insbesondere drehantreibbar mittels eines Antriebselements (600) gemäß einem der Ansprüche 5 bis 12, wobei die Schraube (100) aufweist:
einen Schraubenschaft (102);
einen sich an den Schraubenschaft (102) anschließenden Schraubenkopf (104), in dem ein Antrieb (106) zum Drehantreiben der Schraube (100) mittels eines Antriebselements (600) ausgebildet ist;
wobei der Antrieb (106) einen schraubenaußenseitigen Hohlflügelabschnitt (108) mit kreisförmigem Hohlkern (110) und entlang des Kreisumfangs vorgesehenen Hohlflügeln (112) aufweist;
wobei der Antrieb (100) einen schraubeninnenseitigen Hohlvertiefungsabschnitt (114), insbesondere einen Hohlkegelabschnitt, aufweist;
wobei der Antrieb (100) an einem Übergang zwischen dem Hohlflügelabschnitt (108) und dem Hohlvertiefungsabschnitt (114) einen Fasenabschnitt (116) aufweist, dessen Außenfläche (118) gegenüber einer Außenfläche (120) des Hohlflügelabschnitts (108) und gegenüber einer Außenfläche (122) des Hohlvertiefungsabschnitts (114) abgewinkelt ist;
wobei Ausläufer der Hohlflügel (112) sich bis in den Fasenabschnitt (116) hinein erstrecken;
wobei die Hohlflügel (112) von einem schraubenaußenseitigen Ende des Hohlflügelabschnitts (108) bis zum Anfang des Fasenabschnitts (116) einen konstanten Außendurchmesser haben;
wobei der Hohlkern (110) des Hohlflügelabschnitts (108) sich zur Schraubeninnenseite hin, insbesondere konisch, verjüngt.

2. Schraube (100) gemäß Anspruch 1, wobei der Antrieb (106) der Schraube (100) in einer Querschnittsansicht eine derartige Gestalt hat, dass der Antrieb (106) ausgehend von dem schraubenaußenseitigen Hohlflügelabschnitt (108) ein erstes Mal zu dem sich direkt anschließenden Fasenabschnitt (116) nach innen hin abknickt und ausgehend von dem Fasenabschnitt (116) ein zweites Mal zu dem sich daran direkt anschließenden schraubeninnenseitigen Hohlvertiefungsabschnitt (114) hin abknickt, der wiederum auf einen schraubeninnenseitigen Endpunkt zuläuft.

3. Schraube (100) gemäß Anspruch 1 oder 2, wobei der Hohlvertiefungsabschnitt (114) von Hohlflügeln (112) frei ist, insbesondere eine glatte Außenfläche (122) aufweist.

4. Schraube (100) gemäß einem der Ansprüche 1 bis 3, aufweisend zumindest eines der folgenden Merkmale:
wobei ein Öffnungswinkel (α) eines von dem Fasenabschnitt (116) extrapolierten Konus größer als ein Öffnungswinkel (β) eines von dem Hohlflügelabschnitt (108) extrapolierten Konus ist;
wobei ein Öffnungswinkel (γ) des als Hohlkegelabschnitt ausgebildeten Hohlvertiefungsabschnitts (114) größer als ein Öffnungswinkel (α) eines von dem Fasenabschnitt (116) extrapolierten Konus ist;
wobei die Außenfläche (118) des Fasenabschnitts (116) auf einem Konus mit einem Öffnungswinkel (α) in einem Bereich zwischen 50° und 130°, insbesondere mit einem Öffnungswinkel (α) in einem Bereich zwischen 60° und 120°, weiter insbesondere mit einem Öffnungswinkel (α) in einem Bereich zwischen 80° und 100°, liegt;
wobei ein Öffnungswinkel (γ) des als Hohlkegelabschnitt ausgebildeten Hohlvertiefungsabschnitts (114) in einem Bereich zwischen 100° und 170°, insbesondere in einem Bereich zwischen 110° und 170°, weiter insbesondere in einem Bereich zwischen 130° und 150°, liegt;
wobei ein Verhältnis zwischen einem Hohlflügelaußendurchmesser (A) und einem Hohlflügelinnendurchmesser (B) größer als 1,42 ist, insbesondere größer als 1,44 ist, weiter insbesondere in einem Bereich zwischen 1,43 und 1,60 liegt;
wobei an einem radial innersten Abschnitt von zumindest einem Teil der Hohlflügel (112) eine jeweilige Flügelkante (182) gebildet ist, wobei die Flügelkante (182) insbesondere durch zwei aneinandergrenzende und im Grenzbereich krümmungsfreie Flächenabschnitte gebildet ist, weiter insbesondere mit einem Flügelkantenwinkel (ε) in einem Bereich zwischen 120° und 160°;
wobei der Schraubenkopf (104) ein Senkkopf oder Linsenkopf ist;
wobei die Schraube (100) als selbstbohrende und/oder selbstschneidende Schraube (100), insbesondere als Holzschraube oder Metallbohrschraube, ausgebildet ist.

5. Antriebselement (600) zum Drehantreiben einer Schraube (100), insbesondere einer Schraube (100) gemäß einem der Ansprüche 1 bis 4, zum Einbringen in einen Untergrund, wobei das Antriebselement (600) aufweist:
einen Flügelabschnitt (604) mit kreisförmigem Kern (606) und entlang des Kreisumfangs vorgesehenen Flügeln (608);
einen endseitigen Vertiefungsabschnitt (602), insbesondere einen Kegelabschnitt;
einen Fasenabschnitt (610) an einem Übergang zwischen dem Flügelabschnitt (604) und dem Vertiefungsabschnitt (602), wobei eine Außenfläche (612) des Fasenabschnitts (610) gegenüber einer Außenfläche (614) des Flügelabschnitts (604) und gegenüber einer Außenfläche (616) des Vertiefungsabschnitts (602) abgewinkelt ist;
wobei die Flügel (608) von einem dem Antrieb (106) der Schraube (100) im Drehbetrieb abgewandten Ende des Flügelabschnitts (604) bis zum Anfang des Fasenabschnitts (610) einen konstanten Außendurchmesser haben;
wobei der Kern (606) des Flügelabschnitts (604) sich zum Vertiefungsabschnitt (602) hin, insbesondere konisch, verjüngt.

6. Antriebselement (600) gemäß Anspruch 5, aufweisend zumindest eines der folgenden Merkmale:
wobei Ausläufer der Flügel (608) sich bis in den Fasenabschnitt (610) hinein erstrecken;
wobei der Vertiefungsabschnitt (602) von Flügeln (608) frei ist, insbesondere eine glatte Außenfläche (616) aufweist;
wobei ein Öffnungswinkel (α') eines von dem Fasenabschnitt (610) extrapolierten Konus größer als ein Öffnungswinkel eines von dem Flügelabschnitt (604) extrapolierten Konus ist.

7. Antriebselement (600) gemäß einem der Ansprüche 5 oder 6, wobei ein Öffnungswinkel (γ') des als Kegelabschnitt ausgebildeten Vertiefungsabschnitts (602) größer als ein Öffnungswinkel (α') eines von dem Fasenabschnitt (610) extrapolierten Konus ist.

8. Antriebselement (600) gemäß einem der Ansprüche 5 bis 7, wobei die Außenfläche (612) des Fasenabschnitts (610) auf einem Konus mit einem Öffnungswinkel (α') in einem Bereich zwischen 50° und 130°, insbesondere mit einem Öffnungswinkel (α') in einem Bereich zwischen 60° und 120°, weiter insbesondere mit einem Öffnungswinkel (α') in einem Bereich zwischen 80° und 100°, liegt.

9. Antriebselement (600) gemäß einem der Ansprüche 5 bis 8, wobei ein Öffnungswinkel (γ') des als Kegelabschnitt ausgebildeten Vertiefungsabschnitts (602) in einem Bereich zwischen 100° und 170°, insbesondere in einem Bereich zwischen 110° und 170°, weiter insbesondere in einem Bereich zwischen 130° und 150°, liegt.

10. Antriebselement (600) gemäß einem der Ansprüche 5 bis 9, wobei ein Verhältnis zwischen einem Flügelaußendurchmesser (A') und einem Flügelinnendurchmesser (B') größer als 1,42 ist, insbesondere größer als 1,44 ist, weiter insbesondere in einem Bereich zwischen 1,43 und 1,60 liegt.

11. Antriebselement (600) gemäß einem der Ansprüche 5 bis 10, wobei an einem radial innersten Abschnitt von zumindest einem Teil der Flügel (608) eine jeweilige Flügelkante gebildet ist, wobei die Flügelkante insbesondere durch zwei aneinandergrenzende und im Grenzbereich krümmungsfreie Flächenabschnitte gebildet ist, weiter insbesondere mit einem Flügelkantenwinkel (ε) in einem Bereich zwischen 120° und 160°.

12. Antriebselement (600) gemäß einem der Ansprüche 5 bis 11, wobei das Antriebselement (600) als Bit, als Schraubenschlüssel oder als Schraubendreher ausgebildet ist.

13. Anordnung zum Einbringen einer Schraube (100) in einen Untergrund, wobei die Anordnung aufweist:
die Schraube (100), die gemäß einem der Ansprüche 1 bis 4 ausgebildet ist; und
ein Antriebselement (600) gemäß einem der Ansprüche 5 bis 12 zum Drehantreiben der Schraube (100) zum Einbringen der Schraube (100) in den Untergrund.

14. Anordnung gemäß Anspruch 13, wobei die Schraube (100) und das Antriebselement (600) derart aufeinander angepasst sind, dass beim Eingreifen des Antriebselements (600) in den Antrieb (106) der Schraube (100) eine direkte Berührung einer Wandbegrenzung des Hohlvertiefungsabschnitts (114) durch den Vertiefungsabschnitt (602) verunmöglicht ist.

15. Verfahren zum Einbringen einer Schraube (100) gemäß einem der Ansprüche 1 bis 4 in einen Untergrund mittels eines Antriebselements (600) gemäß einem der Ansprüche 5 bis 12, wobei das Verfahren aufweist:
in Eingriff Bringen der Hohlflügel (112) des Hohlflügelabschnitts (108) der Schraube (100) mit den Flügeln (608) des Flügelabschnitts (604) des Antriebselements (600);
in Eingriff Bringen der Ausläufer der Hohlflügel (112) in dem Fasenabschnitt (116) der Schraube (100) mit den Ausläufern der Flügel (608) des Fasenabschnitts (610) des Antriebselements (600);
Drehantreiben der Schraube (100) mittels des Antriebselements (600).

## Claims

1. A screw (100) for inserting into a ground, in particular rotary drivable by means of a drive element (600) according to one of the claims 5 to 12, wherein the screw (100) comprises:
a screw shaft (102);
a screw head (104) adjacent to the screw shaft (102), in which screwhead (104) a drive (106) is formed for rotary driving the screw (100) by means of a drive element (600);
wherein the drive (106) comprises, at the outer side of the screw, a hollow wing section (108) with a circular hollow core (110) and hollow wings (112) provided along the perimeter;
wherein the drive (106) comprises, at the inner side of the screw, a hollow cavity section (114), in particular a hollow cone section;
wherein the drive (106) comprises, at a transition between the hollow wing section (108) and the hollow cavity section (114), a chamfer section (116), of which an outer plane (118) is angled with respect to an outer plane (120) of the hollow wing section (108) and with respect to an outer plane (122) of the hollow cavity section (114);
wherein extensions of the hollow wings (112) reach into the chamfer section (116);
wherein the hollow wings (112) have a constant outer diameter from an end at the outer side of the hollow wing section (108) to the beginning of the chamfer section (116);
wherein the hollow core (110) of the hollow wing section (108) tapers towards the inner side of the screw, in particular in a conical manner.

2. A screw (100) according to claim 1, wherein, in a cross section, the drive (106) of the screw (100) has such a shape that the drive (106), starting from the hollow wing section (108) at the outer side of the screw, bends for a first time inwards towards the directly adjacent chamfer section (116), and, starting from the chamfer section (116), bends for a second time towards the hollow cavity section (114) that is directly adjacent thereto, which hollow cavity section (114) again runs towards an end point at the inner side of the screw.

3. A screw (100) according to claims 1 or 2, wherein the hollow cavity section (114) is devoid of hollow wings (112), in particular comprises a smooth outer surface (122).

4. A screw (100) according to one of the claims 1 to 3, which comprises at least one of the following features:
wherein an opening angle (α) of a conus that is extrapolated from the chamfer section (116) is larger than an opening angle (β) of a conus that is extrapolated from the hollow wing section (108);
wherein an opening angle (γ) of the hollow cavity section (114), which is formed from a hollow cone section, is larger than an opening angle (α) of a conus that is extrapolated from the chamfer section (116);
wherein the outer plane (118) of the chamfer section (116) is located on a conus with an opening angle (α) in a range between 50° and 130°, in particular with an opening angle (α) in a range of 60° and 120°, further in particular with an opening angle (α) in a range between 80° and 100°;
wherein an opening angle (γ) of the hollow cavity section (114), which is formed from a hollow cone section, is in a range between 100° and 170°, in particular in a range between 110°and 170°, further in particular in a range between 130° and 150°;
wherein a ratio between an outer diameter of a hollow wing (A) and an inner diameter of a hollow wing (B) is larger than 1.42, in particular larger than 1.44, further in particular in a range between 1.43 and 1.60;
wherein at a radially innermost section of at least one part of the hollow wings (112) a respective wing edge (182) is formed, wherein the wing edge (182) is in particular formed by two adjacent plane sections that are curvature-free in the border section, further in particular with a wing edge angle (ε) in a range between 120° and 160°;
wherein the screw head (104) is a countersunk head or a lense head;
wherein the screw (100) is designed as a self-drilling and/or a self-cutting screw (100), in particular as a wood screw or as a metal drilling screw.

5. A drive element (600) for rotary driving a screw (100), in particular a screw (100) according to one of the claims 1 to 4, for inserting into a ground, wherein the drive element (600) comprises:
a wing section (604) with a circular core (606) and wings (608) provided along the circumference;
a cavity section (602) at the end, in particular a cone section;
a chamfer section (610) at a transition between the wing section (604) and the cavity section (602), wherein an outer plane (612) of the chamfer section (610) is angled with respect to an outer plane (614) of the wing section (604) and with respect to an outer plane of the cavity section (602);
wherein the wings (608) have a constant outer diameter from an end of the wing section (604), which end is averted to the drive (106) of the screw (100) in a rotary operation, to the beginning of the chamfer section (610);
wherein the core (606) of the wing section (604) tapers towards the cavity section (602), in particular in a conical manner.

6. A drive element (600) according to claim 5, comprising at least one of the following features:
wherein extensions of the wings (608) extend into the chamfer section (610);
wherein the cavity section (602) is devoid of wings (608), in particular comprises a smooth outer surface (616);
wherein an opening angle (α') of a conus that is extrapolated from the chamfer section (610) is larger than an opening angle of a conus that is extrapolated from the wing section (604).

7. A drive element (600) according to one of the claims 5 or 6, wherein an opening angle (γ') of the cavity section (602), that is formed from a cone section, is larger than an opening angle (α') of a conus, that is extrapolated from the chamfer section (610).

8. A drive element (600) according to one of the claims 5 to 7, wherein the outer plane (612) of the chamfer section (610) is located on a conus with an opening angle (α') in a range between 50° and 130°, in particular with an opening angle in a range between 60° and 130°, further in particular with an opening angle (α') in a range between 80° and 100°.

9. A drive element (600) according to one of the claims 5 to 8, wherein an opening angle (γ') of the cavity section (602), that is formed from a cone section, is in a range between 100° and 170°, in particular in a range between 110° and 170°, further in particular in a range between 130° and 150°.

10. A drive element (600) according to one of the claims 5 to 9, wherein a ratio of an outer diameter of a wing (A') and an inner diameter of a wing (B') is larger than 1.42, in particular larger than 1.44, further in particular is in a range between 1.43 and 1.60;

11. A drive element (600) according to one of the claims 5 to 10, wherein at a radially innermost section of at least one part of the wings (608) a respective wing edge is formed, wherein the wing edge is formed in particular by two adjacent plane sections that are curvature-free in the border section, further in particular with a wing edge angle (ε) in a range between 120° and 160°.

12. A drive element (600) according to one of the claims 5 to 11, wherein the drive element (600) is designed as a bit, as a screw wrench or as a screwdriver.

13. An arrangement for inserting a screw (100) into a ground, wherein the arrangement comprises:
the screw (100), which is formed according to claims 1 to 4; and
a drive element (600) according to one of the claims 5 to 12 for rotary driving the screw (100) for inserting the screw (100) into the ground.

14. An arrangement according to claim 13, wherein the screw (100) and the drive element (600) are matched to each other in such a way, that upon engaging the drive element (600) into the drive (106) of the screw (100), a direct contact of a wall boundary of the hollow cavity section (114) by the cavity section (602) is not possible.

15. A method for inserting a screw (100) according to one of the claims 1 to 4 into a ground by means of a drive element (600) according to one of the claims 5 to 12, wherein the method comprises:
engaging the hollow wings (112) into the hollow wing section (108) of the screw (100) with the wings (608) of the wing section (604) of the drive element (600);
engaging the extensions of the hollow wings (112) into the chamfer section (116) of the screw (100) with the extensions of the wings (608) of the chamfer section (610) of the drive element (600);
rotary driving the screw (100) by means of the drive element (600).

## Revendications

1. Vis (100) destinée à être introduite dans un support, en particulier pouvant être entraînée en rotation au moyen d'un élément d'entraînement (600) selon l'une quelconque des revendications 5 à 12, **caractérisée en ce que** la vis (100) présente :
une tige de vis (102) ;
une tête de vis (104) se raccordant à la tige de vis (102), dans laquelle est réalisé un entraînement (106) destiné à entraîner en rotation la vis (100) au moyen d'un élément d'entraînement (600) ;
dans laquelle l'entraînement (106) présente une section à ailettes creuses (108) côté extérieur de vis avec un centre creux (110) circulaire et des ailettes creuses (112) prévues le long de la circonférence ;
dans laquelle l'entraînement (106) présente une section évidée creuse (114) côté intérieur de vis, en particulier une section conique creuse ;
dans laquelle l'entraînement (106) présente au niveau d'une transition entre la section à ailettes creuses (108) et la section évidée creuse (114) une section en biseau (116), dont la surface extérieure (118) est coudée par rapport à une surface extérieure (120) de la section à ailettes creuses (108) et par rapport à une surface extérieure (122) de la section évidée creuse (114) ;
dans laquelle des ramifications des ailettes creuses (112) s'étendent jusqu'à l'intérieur de la section en biseau (116) ;
dans laquelle les ailettes creuses (112) présentent d'une extrémité côté extérieur de vis de la section à ailettes creuses (108) jusqu'au début de la section en biseau (116) un diamètre extérieur constant ;
dans laquelle le centre creux (110) de la section à ailettes creuses (108) se rétrécit, en particulier de manière conique, en direction du côté intérieur de vis.

2. Vis (100) selon la revendication 1, **caractérisée en ce que** l'entraînement (106) de la vis (100) présente dans une vue en coupe transversale une configuration telle que l'entraînement (106) plie une première fois vers l'intérieur à partir de la section à ailettes creuses (108) côté extérieur de vis en direction de la section en biseau (116) se raccordant directement, et plie une deuxième fois à partir de la section en biseau (116) en direction de la section évidée creuse (114) côté intérieur de vis se raccordant directement à celle-ci, qui se dirige à nouveau sur un point d'extrémité côté intérieur de vis.

3. Vis (100) selon la revendication 1 ou 2, **caractérisée en ce que** la section évidée creuse (114) est exempte d'ailettes creuses (112), en particulier présente une surface extérieure (122) lisse.

4. Vis (100) selon l'une quelconque des revendications 1 à 3, présentant au moins une des caractéristiques suivantes :
**caractérisée en ce qu'**un angle d'ouverture (α) d'un cône extrapolé depuis la section en biseau (116) est supérieur à un angle d'ouverture (β) d'un cône extrapolé depuis la section à ailettes creuses (108) ;
dans laquelle un angle d'ouverture (γ) de la section évidée creuse (114) réalisée en tant que section conique creuse est supérieur à un angle d'ouverture (α) d'un cône extrapolé depuis la section en biseau (116) ;
dans laquelle la surface extérieure (118) de la section en biseau (116) se situe sur un cône avec un angle d'ouverture (α) dans une plage entre 50° et 130°, en particulier avec un angle d'ouverture (α) dans une plage entre 60° et 120°, plus particulièrement avec un angle d'ouverture (α) dans une plage entre 80° et 100° ;
dans laquelle un angle d'ouverture (γ) de la section évidée creuse (114) réalisée en tant que section conique creuse se situe dans une plage entre 100° et 170°, en particulier dans une plage entre 110° et 170°, plus particulièrement dans une plage entre 130° et 150° ;
dans laquelle un rapport entre un diamètre extérieur d'ailette creuse (A) et un diamètre intérieur d'ailette creuse (B) est supérieur à 1,42, en particulier supérieur à 1,44, plus particulièrement se situe dans une plage entre 1,43 et 1,60 ;
dans laquelle un bord d'ailette (182) respectif est formé sur une section radialement la plus intérieure d'au moins une partie de l'ailette creuse (112), dans laquelle le bord d'ailette (182) est formé en particulier par deux sections de surface contigües et exemptes de courbure dans la zone limite, plus particulièrement avec un angle de bord d'ailette (ε) dans une plage entre 120° et 160° ;
dans laquelle la tête de vis (104) est une tête fraisée ou tête bombée ;
dans laquelle la vis (100) est réalisée en tant que vis (100) autoforante et/ou autotaraudeuse, en particulier en tant que vis à bois ou vis à percer le métal.

5. Elément d'entraînement (600) destiné à entraîner en rotation une vis (100), en particulier une vis (100) selon l'une quelconque des revendications 1 à 4, destinée à être introduite dans un support, **caractérisé en ce que** l'élément d'entraînement (600) présente :
une section à ailettes (604) avec un centre (606) circulaire et des ailettes (608) prévues le long de la circonférence ;
une section évidée (602) côté extrémité, en particulier une section conique ;
une section en biseau (610) au niveau d'une transition entre la section à ailettes (604) et la section évidée (602), dans lequel une surface extérieure (612) de la section en biseau (610) est coudée par rapport à une surface extérieure (614) de la section à ailettes (604) et par rapport à une surface extérieure (616) de la section évidée (602) ;
dans lequel les ailettes (608) présentent d'une extrémité de la section à ailettes (604) opposée à l'entraînement (106) de la vis (100) en mode rotation jusqu'au début de la section en biseau (610) un diamètre extérieur constant ;
dans lequel le centre (606) de la section à ailettes (604) se rétrécit, en particulier de manière conique, en direction de la section évidée (602).

6. Elément d'entraînement (600) selon la revendication 5, présentant au moins une des caractéristiques suivantes :
**caractérisé en ce que** des ramifications des ailettes (608) s'étendent jusqu'à l'intérieur de la section en biseau (610) ;
dans lequel la section évidée (602) est exempte d'ailettes (608), en particulier présente une surface extérieure (616) lisse ;
dans lequel un angle d'ouverture (α') d'un cône extrapolé depuis la section en biseau (610) est supérieur à un angle d'ouverture d'un cône extrapolé depuis la section à ailettes (604).

7. Elément d'entraînement (600) selon l'une quelconque des revendications 5 ou 6, **caractérisé en ce qu'**un angle d'ouverture (γ') de la section évidée (602) réalisée en tant que section conique est supérieur à un angle d'ouverture (α') d'un cône extrapolé depuis la section en biseau (610).

8. Elément d'entraînement (600) selon l'une quelconque des revendications 5 à 7, **caractérisé en ce que** la surface extérieure (612) de la section en biseau (610) se situe sur un cône avec un angle d'ouverture (α') dans une plage entre 50° et 130°, en particulier avec un angle d'ouverture (α') dans une plage entre 60° et 120°, plus particulièrement avec un angle d'ouverture (α') dans une plage entre 80° et 100°.

9. Elément d'entraînement (600) selon l'une quelconque des revendications 5 à 8, **caractérisé en ce qu'**un angle d'ouverture (γ') de la section évidée (602) réalisée en tant que section conique se situe dans une plage entre 100° et 170°, en particulier dans une plage entre 110° et 170°, plus particulièrement dans une plage entre 130° et 150°.

10. Elément d'entraînement (600) selon l'une quelconque des revendications 5 à 9, **caractérisé en ce qu'**un rapport entre un diamètre extérieur d'ailette (A') et un diamètre intérieur d'ailette (B') est supérieur à 1,42, en particulier supérieur à 1,44, plus particulièrement se situe dans une plage entre 1,43 et 1, 60.

11. Elément d'entraînement (600) selon l'une quelconque des revendications 5 à 10, **caractérisé en ce qu'**un bord d'ailette respectif est formé sur une section radialement la plus intérieure d'au moins une partie de l'ailette (608), dans lequel le bord d'ailette est formé en particulier par deux sections de surface contigües et exemptes de courbure dans la zone limite, plus particulièrement avec un angle de bord d'ailette (ε) dans une plage entre 120° et 160°.

12. Elément d'entraînement (600) selon l'une quelconque des revendications 5 à 11, **caractérisé en ce que** l'élément d'entraînement (600) est réalisé en tant que mèche, en tant que clé ou en tant que tournevis.

13. Ensemble destiné à introduire une vis (100) dans un support, **caractérisé en ce que** l'ensemble présente :
la vis (100), qui est réalisée selon l'une quelconque des revendications 1 à 4 ; et
un élément d'entraînement (600) selon l'une quelconque des revendications 5 à 12 destiné à entraîner en rotation la vis (100) pour l'introduction de la vis (100) dans le support.

14. Ensemble selon la revendication 13, **caractérisé en ce que** la vis (100) et l'élément d'entraînement (600) sont adaptés l'un à l'autre de telle sorte que, lors de la prise de l'élément d'entraînement (600) dans l'entraînement (106) de la vis (100), un contact direct d'une délimitation de paroi de la section évidée creuse (114) par la section évidée (602) est rendu impossible.

15. Procédé pour introduire une vis (100) selon l'une quelconque des revendications 1 à 4 dans un support au moyen d'un élément d'entraînement (600) selon l'une quelconque des revendications 5 à 12, **caractérisé en ce que** le procédé présente :
la mise en prise des ailettes creuses (112) de la section à ailettes creuses (108) de la vis (100) avec les ailettes (608) de la section à ailettes (604) de l'élément d'entraînement (600) ;
la mise en prise des ramifications des ailettes creuses (112) dans la section en biseau (116) de la vis (100) avec les ramifications des ailettes (608) de la section en biseau (610) de l'élément d'entraînement (600) ;
l'entraînement en rotation de la vis (100) au moyen de l'élément d'entraînement (600).
